# EUROPÄISCHE PATENTSCHRIFT

(11) **EP 4 275 329 B1**
(45) Veröffentlichungstag und Bekanntmachung des Hinweises auf die Patenterteilung: **27.05.2026**
(21) Anmeldenummer: 22744400.7
(22) Anmeldetag: 30.06.2022
(51) Int. Cl.: H04L 9/40, H04W 12/121, H04W 12/45, H04W 48/18, H04W 12/088, H04L 67/12, H04W 4/44, H04W 88/06

(54) **MOBILFUNKGERÄT, VERFAHREN ZUM BETREIBEN EINES MOBILFUNKGERÄTS UND FAHRZEUG**
MOBILE RADIO DEVICE, METHOD FOR OPERATING A MOBILE RADIO DEVICE, AND VEHICLE
DISPOSITIF RADIO MOBILE, PROCÉDÉ DE FONCTIONNEMENT D'UN DISPOSITIF RADIO MOBILE ET VÉHICULE

(30) Priorität: 13.07.2021 DE 102021003596
(43) Veröffentlichungstag der Anmeldung: 15.11.2023
(73) Patentinhaber: Mercedes-Benz Group AG, 70372 Stuttgart (DE)
(72) Erfinder: AYDIN, Osman, 70771 Leinfelden-Echterdingen (DE); PAVLOVIC, Viktor, 70469 Stuttgart (DE)
(74) Vertreter: Novagraaf Group
(86) Internationale Anmeldenummer: PCT/EP2022/068013
(87) Internationale Veröffentlichungsnummer: WO 2023/285150

(56) Entgegenhaltungen:
- DE-A1- 102016 114 321
- DE-A1- 102017 128 063
- US-A1- 2015 271 138
- US-A1- 2020 274 851

## Beschreibung

Die Erfindung betrifft ein Verfahren zum Betreiben eines Systems bestehend aus einem Mobilfunkgerät und einer separaten Recheneinheit, das Mobilfunkgerät mit einem Betriebssystem und wenigstens zwei SIM-Profilen zur Bereitstellung mehrerer voneinander unabhängiger Mobilfunkanschlüsse nach der im Oberbegriff von Anspruch 1 näher definierten Art sowie ein Fahrzeug mit einem Mobilfunkgerät.

IT-Systeme wie Computer, mobile Endgeräte, Hochleistungsrechner, verteilte Systeme, Datenbanksysteme, eingebettete Systeme, Messsysteme oder dergleichen verfügen typischerweise über verschiedene Schnittstellen zur Interaktion. Dabei kann eine Interaktion mit Menschen erfolgen, beispielsweise über eine Mensch-Maschine-Schnittstelle, als auch zwischen IT-Systemen selbst, wobei Kommunikationsprotokolle wie beispielsweise das Internet Protocol (IP) oder das Transmission Control Protocol (TCP) verwendet werden. Über solche Schnittstellen sind Angreifer dazu in der Lage, IT-Systeme anzugreifen. Solche Angriffe haben typischerweise das Ziel, den normalen Betrieb von IT-Systemen zu beeinflussen, unautorisierten Zugang zu erlangen, IT-Systeme zu zerstören oder lahmzulegen, kritische Informationen zu stehlen oder zu manipulieren, oder dergleichen. Häufig werden IT-Systeme hierzu mit Malware infiziert beziehungsweise angegriffen. Bei Malware kann es sich beispielsweise um Viren, Spyware, Adware, Botnetze oder dergleichen handeln. Ein IT-Systembetreiber ist typischerweise daran interessiert, das betriebene IT-System möglichst zuverlässig vor solchen Angriffen zu schützen.

Zunehmend werden Mobilfunkgeräte in Fahrzeuge integriert, um einen Datenaustausch, beispielsweise zur Übertragung von Diagnosedaten mit einem Fahrzeughersteller, zu ermöglichen. Solche Mobilfunkgeräte können auch mit mehreren SIM-Profilen ausgestattet werden, beispielsweise in Form von mehreren SIM-Karten und/oder mehreren kodiert auf einer Speichereinrichtung abgelegten SIM-Signaturen. Das Vorsehen zusätzlicher SIM-Profile ermöglicht die Integration von Kunden- bzw. Dritt-SIM-Profilen, welche im Gegensatz zu einem vertrauensvollen Hersteller-SIM-Profil vergleichsweise einfach zu einer Kompromittierung des Mobilfunkgeräts genutzt werden können. So können beispielsweise über ein von einem Angreifer betriebenes Mobilfunknetz, beispielsweise ein über eine manipulierte Femtozelle betriebenes Mobilfunknetz, schädliche Datenpakete in das Mobilfunkgerät eingeschleust werden und zur Ausführung von Schadsoftware auf dem Mobilfunkgerät oder einer weiteren Recheneinheit des Fahrzeugs genutzt werden.

Aus dem allgemeinen Stand der Technik sind generell verschiedene hardware- und/oder softwareseitige Lösungen zum Schutz von IT-Systemen bekannt. Hierzu zählen beispielsweise Firewalls, Antivirenprogramme, Angriffserkennungssysteme, auch als Intrusion-Detection-System (IDS) bezeichnet, sowie Angriffserkennungs- und - Abwehrsysteme, auch als Intrusion-Prevention-System (IPS) bezeichnet. Angriffserkennungssysteme bzw. Angriffserkennungs- und -Abwehrsysteme dienen zur Erkennung und/oder Abwehr von auf Computersysteme und/oder Rechnernetze gerichteten Angriffen. Ein solches System wird typischerweise auf der zu überwachenden Hardware ausgeführt und/oder ist direkt in eine Firewall integriert. Neben hostbasierten Angriffserkennungssystemen und netzwerkbasierten Angriffserkennungssystemen sind auch hybride Systeme bekannt. Zum Erkennen eines Angriffs werden vom Angriffserkennungssystem bzw. dem Angriffserkennungs- und -Abwehrsystem überwachte Daten und/oder ein überwachter Netzwerkverkehr auf bekannte Angriffsmuster hin analysiert. Hierzu umfasst ein entsprechendes System eine Musterdatenbank mit bekannten Angriffsmustern. Wird ein solches Angriffsmuster erkannt, so schlägt das entsprechende Angriffserkennungssystem Alarm. Mit Hilfe heuristischer Methoden sowie statistischen Analysen können auch bisher unbekannte Angriffe erkannt werden. Ein Angriffserkennungs- und -Abwehrsystem ist zusätzlich dazu in der Lage, Datenpakete zu verwerfen, eine Kommunikationsverbindung zu unterbrechen und/oder übertragene Daten zu ändern.

Aus der WO 2014/105309 A1 sind ein System und ein Verfahren zur Korrelation von Netzwerkinformationen mit Teilnehmerinformationen in einer mobilen Netzwerkumgebung bekannt. Von einem Netzwerk wie dem Internet, einem Intranet, einem VPN oder dergleichen empfangene Datenpakete werden dabei von einer Netzwerksicherheitsplattform mit Hilfe von Deep-Packet-Inspection untersucht. Mit Hilfe der Netzwerksicherheitsplattform und der Deep-Packet-Inspection wird es Betreibern drahtloser Netzwerke ermöglicht, Verhaltensprofile von Teilnehmern des mobilen Netzwerkes zu erstellen und bestimmte Netzwerkereignisse wie das Aufrufen bestimmter Websites, das Ausführen bestimmter Applikationen, das Empfangen und/oder Versenden bestimmter Daten oder dergleichen mit bestimmten Netzwerkteilnehmern in Verbindung zu bringen. Hierdurch können gezielt Angriffe von oder durch die Teilnehmer des mobilen Netzwerks unterbunden werden. Beispielsweise kann das Herunterladen von Malware erkannt und verhindert werden oder eine Kommunikation eines Netzwerkteilnehmers mit einer sicherheitskritischen Website erkannt oder eingestellt werden. Die Netzwerksicherheitsplattform wird vom Betreiber der mobilen Netzwerkumgebung betrieben, wodurch die einzelnen Teilnehmer der mobilen Netzwerkumgebung keinen Einfluss auf die den einzelnen Teilnehmern zugeordneten Benutzerverhaltensprofile haben. Mit anderen Worten ist der Betreiber der mobilen Netzwerkumgebung dazu in der Lage, die Teilnehmer zu überwachen und zu kontrollieren.

Ferner offenbart die DE 10 2017 128 063 A1 ein Fahrzeug mit einer Telematikeinheit mit zwei SIM-Profilen zur Nutzung zweier separater Mobilfunkanschlüsse. Die Telematikeinheit ist dabei dazu in der Lage Leistungskennzahlen des zugrunde liegenden Kommunikationsnetzwerks wie eine Netzwerkstärke, Datenübertragungsrate oder Netzwerkstabilität zu ermitteln.

Ferner offenbart die US 2020/274851 A1 ein Netzwerksicherheitsgateway zur Überwachung des innerhalb eines Kommunikationsnetzwerks eines Fahrzeugs übertragenen Netzwerkverkehrs. Das Netzwerksicherheitsgateways ist extern zu einem fahrzeuginternen Mobilfunkgerät ausgeführt und in Informationsflussrichtung dem Mobilfunkgerät nachgelagert. Das Netzwerksicherheitsgateway umfasst eine Firewall mit einer Angriffserkennungs- und Abwehrfunktionalität. Die Firewall und damit die Angriffserkennungs- und Abwehrfunktionalität werden als Softwaremodul von dem Betriebssystem des Netzwerksicherheitsgateways ausgeführt.

Ein Fahrzeug mit einer Telematikeinheit, aufweisend zwei SIM-Profile, ist auch aus der DE 10 2016 114 321 A1 bekannt. Ist eine Empfangssignalstärke oder eine Datenübertragungsrate eines der Mobilfunkanschlüsse der Telematikeinheit zu gering, so ist die Telematikeinheit dazu in der Lage automatisch den jeweiligen Mobilfunkanschluss auf ein anderes Mobilfunknetz aufzuschalten.

Ferner offenbart die US 2015/0271138 A1 eine Firewall für ein Mobilfunkgerät zur Überwachung und Vermittlung von mittels SMS ausgetauschter Informationen. Die Firewall verfügt über eine Angriffserkennungsfunktionalität bzw. eine Angriffserkennungs- und- Abwehrfunktionalität.

Der vorliegenden Erfindung liegt die Aufgabe zugrunde, ein Verfahren zum besonders sicheren Betrieb eines Mobilfunkgeräts mit einem Betriebssystem und wenigstens zwei SIM-Profilen zur Bereitstellung mehrerer voneinander unabhängiger Mobilfunkanschlüsse anzugeben.

Erfindungsgemäß wird diese Aufgabe durch ein Verfahren zum Betrieb eines Systems bestehend aus einem Mobilfunkgerät und einer separaten Recheneinheit, das Mobilfunkgerät mit einem Betriebssystem und wenigstens zwei SIM-Profilen zur Bereitstellung mehrerer voneinander unabhängiger Mobilfunkanschlüsse mit den Merkmalen des Anspruchs 1 gelöst. Vorteilhafte Ausgestaltungen und Weiterbildungen sowie ein Fahrzeug mit einem derart betreibbaren Mobilfunkgerät ergeben sich aus den hiervon abhängigen Ansprüchen.

Bei einem Verfahren zum Betreiben eines Systems mit einem Mobilfunkgerät, das Mobilfunkgerät mit einem Betriebssystem und wenigstens zwei SIM-Profilen zur Bereitstellung mehrerer voneinander unabhängiger Mobilfunkanschlüsse ist erfindungsgemäß ein Angriffserkennungssystem oder ein Angriffserkennungs- und -Abwehrsystem vorgesehen, welches dazu eingerichtet ist, zumindest die mit dem Netzwerkverkehr übertragenen Informationen zu identifizieren, wobei das Angriffserkennungssystem oder das Angriffserkennungs- und -Abwehrsystem in einer Informationsflussrichtung von wenigstens einem Mobilfunkanschluss empfangenen Netzwerkverkehrs vor dem Betriebssystem des Mobilfunkgeräts angeordnet ist und in ein Modem integriert ist, wobei nach Erkennen einer Sicherheitsbedrohung für das Mobilfunkgerät das Betriebssystem rekonfiguriert wird, um ein Systemverhalten an die Sicherheitsbedrohung anzupassen und/oder eine Funktionalität wenigstens einer dem Mobilfunkgerät in Informationsflussrichtung nachgelagerten Hardware und/oder Softwarekomponente eingeschränkt wird.

Durch ein in Informationsflussrichtung vor dem Betriebssystem angeordnetes Angriffserkennungssystem oder Angriffserkennungs- und -Abwehrsystem ist das Mobilfunkgerät besonders sicher betreibbar. So sind mit dem Angriffserkennungssystem bzw. dem Angriffserkennungs- und -Abwehrsystem durch das Vorsehen in Informationsflussrichtung vor dem Betriebssystem Angriffe besonders früh erkennbar. Entsprechend ist das Treffen angemessener Reaktionen auf einen Angriff ebenso früh möglich. Das Mobilfunkgerät ist dadurch auch im Falle von Angriffen auf Netzwerkschnittstellen, Interfacetreiber sowie IP-Stacks des Betriebssystems schützbar. Typischerweise werden Angriffserkennungssysteme oder Angriffserkennungs- und - Abwehrsysteme in eine Firewall bzw. in ein Betriebssystem integriert. Eine solche integrierte Angriffserkennung bzw. -abwehr weist jedoch eingeschränkte Möglichkeiten zur Überwachung und Filterung einkommender Datenpakete auf. Zudem muss das Host-Betriebssystem die zu analysierenden Datenpakte verarbeiten, damit das Angriffserkennungs- bzw. -Abwehrsystem Angriffe erkennen kann, wodurch sich das Betriebssystem selbst möglichen Angriffen aussetzt. Werden die vom Netzwerkverkehr umfassten Datenpakete jedoch in Informationsflussrichtung vor dem Betriebssystem untersucht, so kann das Betriebssystem auch nicht angegriffen werden.

Mit Hilfe eines Angriffserkennungssystems können im Falle eines erkannten Angriffs Warnungen ausgegeben werden. Mit Hilfe eines Angriffserkennungs- und - Abwehrsystems hingegen können jedoch auch direkt vom Mobilfunkgerät selbst adäquate Maßnahmen zur Eindämmung oder zur Verhinderung des Angriffs eingeleitet werden.

Das Mobilfunkgerät weist wenigstens zwei Mobilfunkanschlüsse auf. Mit Hilfe des Angriffserkennungssystems bzw. des Angriffserkennungs- und -Abwehrsystems lassen sich Angriffe auf die einzelnen Mobilfunkanschlüsse selektiv erkennen. Dies erlaubt das spezifische Reagieren auf einen über einen jeweiligen Mobilfunkanschluss durchgeführten Angriff. So kann auf einen Sicherheitsangriff auf einen ersten Mobilfunkanschluss anders reagiert werden als auf einen Sicherheitsangriff auf einen zweiten Mobilfunkanschluss. Ferner kann bei einem Angriff über einen ersten Mobilfunkanschluss der sichere Betrieb des Mobilfunkgeräts über zumindest einen zweiten Mobilfunkanschluss sichergestellt werden. Durch das frühzeitige Erkennen und Reagieren auf Sicherheitsangriffe ist es somit möglich, eine Manipulation des Mobilfunkgeräts einzuschränken, zu verhindern und/oder eine Abschaltung des Mobilfunkgeräts aus Sicherheitsgründen zu verhindern. Zur Kommunikation können generell beliebige Funktechnologien wie Mobilfunk, WiFi oder dergleichen vom Mobilfunkgerät verwendet werden. Hierzu können beliebige Mobilfunk- bzw. Kommunikations-Standards wie 2G-5G, oder auch künftige Kommunikationsstandards eingesetzt werden. Beispielsweise kann über wenigstens einen Mobilfunkanschluss WLAN-Telefonie bereitgestellt werden. Ein entsprechendes Funknetz kann von einer stationären Basisstation, beispielsweise einem Mobilfunkmast oder einer Femtozelle, und/oder einer mobilen Station wie einem Satelliten, einer Drohne, einem Ballon oder dergleichen bereitgestellt werden.

Wie bereits beschrieben ist es vorgesehen, dass das Angriffserkennungssystem oder das Angriffserkennungs- und -Abwehrsystem in ein Modem integriert ist. Mit Hilfe eines Modems stellt das Mobilfunkgerät eine Kommunikation mit einem Mobilfunknetz her. Durch die Integration des Angriffserkennungssystems bzw. des Angriffserkennungs- und - Abwehrsystems in das Modem wird somit der Netzwerkverkehr im Mobilfunkgerät besonders früh untersucht und/oder beeinflusst. Hierdurch wird das Mobilfunkgerät noch zuverlässiger vor Angriffen geschützt. Zum Vorsehen des Angriffserkennungssystems bzw. des Angriffserkennungs- und -Abwehrsystems im Modem kann das entsprechende System alleinig durch Software, sprich als Softwaremodul, in das Modem integriert sein. Es ist auch denkbar, dass das Modem zusätzliche Hardware wie Speichereinrichtungen und/oder Ausführeinrichtungen wie Prozessoren aufweist, welche alleinig der Funktionalität des Angriffserkennungssystems bzw. Angriffserkennungs- und - Abwehrsystems zugeordnet sind.

Wie bereit beschrieben, wird nach Erkennen einer Sicherheitsbedrohung für das Mobilfunkgerät dessen Betriebssystem rekonfiguriert, um ein Systemverhalten an die Sicherheitsbedrohung anzupassen und/oder eine Funktionalität wenigstens einer dem Mobilfunkgerät in Informationsflussrichtung nachgelagerten Hardware- und/oder Softwarekomponente eingeschränkt.

Durch die Rekonfiguration des Betriebssystems lässt sich trotz erkannter Sicherheitsbedrohung ein Betrieb des Mobilfunkgeräts aufrechterhalten. Insbesondere wenn über einen ersten Mobilfunkanschluss ein Angriff erfolgt, kann der Netzwerkverkehr über wenigstens einen zweiten Mobilfunkanschluss weiterlaufen. Entsprechende, in einem Angriffsszenario durch das Angriffserkennungssystem bzw. das Angriffserkennungs- und -Abwehrsystem durchzuführende Maßnahmen können in einer Maßnahmendatenbank des Angriffserkennungssystems bzw. des Angriffserkennungs- und -Abwehrsystems gespeichert sein. Es ist auch möglich, dass bei einem Angriff auf einen ersten Mobilfunkanschluss über wenigstens einen zweiten Mobilfunkanschluss neue Anweisungen zum adäquaten Reagieren auf den Angriff vom Mobilfunkgerät empfangen werden. So können Sicherheitslücken über den Mobilfunkanschluss, der vom Angriff ausgenommen ist, geschlossen und auf neue, bisher unbekannte Bedrohungen schnell reagiert werden. Ferner kann zur Auswahl einer geeigneten Reaktion auf einen erfolgten Angriff erst eine Abstimmung mit einer zentralen Recheneinheit, beispielsweise einem Backend eines Fahrzeugherstellers, erfolgen.

Neben der Rekonfiguration des Betriebssystems können auch nachgelagerte Hardware- und/oder Softwarekomponenten in ihrer Betriebsweise verändert werden. Bei einer dem Mobilfunkgerät nachgelagerten Hardwarekomponente kann es sich um eine Recheneinheit eines Fahrzeugs handeln. Beispielsweise kann es sich dabei um einen zentralen Bordcomputer, ein Steuergerät eines Fahrzeuguntersystems, eine Telematikeinheit oder dergleichen handeln. Bei den Softwarekomponenten kann es sich um auf einer solchen entsprechenden Recheneinheit ausgeführter Software wie beispielsweise einer Navigationsapp, einer Radioapp, einem Programm zur Ventilsteuerung, einem Programm zum Anpassen eines beliebigen Reglerverhaltens oder dergleichen handeln. Hierdurch werden noch umfassendere Maßnahmen zum adäquaten Reagieren auf potenzielle Angriffe geschaffen.

Eine vorteilhafte Weiterbildung des Verfahrens sieht vor, dass dem Angriffserkennungssystem oder dem Angriffserkennungs- und -Abwehrsystem in Informationsflussrichtung des Netzwerkverkehrs eine Firewall nachgeordnet ist. Durch das Vorsehen einer Firewall ist das Mobilfunkgerät noch sicherer betreibbar. Da die Firewall dem Angriffserkennungssystem bzw. dem Angriffserkennungs- und - Abwehrsystem nachgelagert ist und die entsprechenden Systeme nicht in die Firewall integriert sind, kann eine Funktionalität des Angriffserkennungssystems bzw. des Angriffserkennungs- und -Abwehrsystems umfassender ausgeführt werden. Somit ist ein noch sicherer Schutz des Mobilfunkgeräts möglich.

Entsprechend einer weiteren vorteilhaften Ausgestaltung des Verfahrens ist das Angriffserkennungssystem oder das Angriffserkennungs- und -Abwehrsystem dazu eingerichtet, den Netzwerkverkehr zu überwachen, zu kontrollieren und/oder zu filtern. Durch das Überwachen des Netzwerkverkehrs können gefährliche Datenpakete sowie Angriffsmuster erkannt werden. Dabei können gezielt auch einzelne Datenpakete oder einzelne Bausteine des Netzwerkverkehrs detailliert untersucht, sprich kontrolliert werden. Beispielsweise können einzelne Codeabschnitte in einer sicheren Umgebung wie einer virtuellen Maschine ausgeführt und auf ihre Auswirkung hin untersucht werden. Analog können auch einzelne Netzverkehrbausteine bzw. Datenpakete an einer Weiterleitung an das Betriebssystem bzw. die Firewall gehindert werden, sprich der Netzwerkverkehr wird gefiltert. So kann beispielsweise das Weiterleiten gefährlicher Datenpakete an das Betriebssystem und/oder dem Mobilfunkgerät in Informationsflussrichtung nachgelagerte Recheneinheiten unterbunden werden und/oder Denail of Service (DOS) Attacken erkannt und verhindert werden.

Entsprechend einer weiteren vorteilhaften Ausgestaltung des Verfahrens ist ein Deep-Packet-Inspection-Module in das Angriffserkennungssystem oder Angriffserkennungs- und -Abwehrsystem integriert. Deep-Packet-Inspection erlaubt neben dem Überprüfen eines Headerteils eines Datenpakets auch dessen Inhalt zu überprüfen. Hierdurch ist eine noch umfassendere und damit sichere Analyse des Netzwerkverkehrs möglich. Zudem lassen sich mit Hilfe von Deep-Packet-Inspection auch Datenströme regulieren. Durch das Vorsehen zusätzlicher Sicherheitszertifikate können gegebenenfalls auch verschlüsselte Datenströme aufgebrochen und analysiert werden.

Bevorzugt ist das Mobilfunkgerät als mobiles Endgerät oder Telekommunikationsmodul eines Fahrzeugs ausgeführt. Mobile Endgeräte wie Smartphones, Tablets, Laptops oder dergleichen finden heutzutage breite Anwendungen. Durch eine Ausführung eines solchen mobilen Endgeräts gemäß des erfindungsgemäßen Mobilfunkgeräts können solche Endgeräte noch sicherer betrieben werden. Durch die hohe Verbreitung können besonders viele Nutzer geschützt werden. Mit fortschreitender Digitalisierung werden auch zunehmend Fahrzeuge vernetzt. Mit Hilfe eines Telekommunikationsmoduls können Fahrzeuge beispielsweise Diagnoseparameter für Forschungs- und Entwicklungszwecke an den Fahrzeughersteller übertragen, Daten für Komfortdienste wie Verkehrsdaten, einen Wetterbericht oder dergleichen empfangen oder auch Firmware- bzw. Softwareupdates für Steuergeräte empfangen. Durch das Ausführen eines solchen Telekommunikationsmoduls gemäß des erfindungsgemäßen Mobilfunkgeräts lassen sich solche Fahrzeuge noch zuverlässiger vor Angriffen schützen.

Dies ist insbesondere bedeutend für automatisiert oder autonom gesteuerte Fahrzeuge wie beispielsweise autonome Lkws. So können solche autonomen Fahrzeuge beispielsweise von einem Fahrzeugkontrollzentrum Steuerungsbefehle empfangen. So ist es denkbar, dass durch einen Angriff auf das Telekommunikationsmodul eines solchen Fahrzeugs manipulierte Steuerungsbefehle an das Fahrzeug verschickt werden, damit dieses in einen Unfall verwickelt wird oder zu einem abweichenden Zielort gelenkt wird, beispielsweise um eine Ladung des autonomen Lkws zu stehlen. Durch eine Ausführung des Telekommunikationsmoduls als erfindungsgemäßes Mobilfunkgerät wird eine Wahrscheinlichkeit einer erfolgreichen Durchführung eines solchen Angriffs jedoch minimiert.

Zur Kommunikation mit dem Fahrzeughersteller weist ein solches Telekommunikationsmodul ein dem Fahrzeughersteller zugeordnetes SIM-Profil auf. Typischerweise vereinbart dabei der Fahrzeughersteller mit einem Mobilfunknetzbetreiber Konditionen wie einmalige oder reguläre Kosten, eine Datenbandbreite, eine maximal zulässige pro Zeiteinheit verschickte oder empfangene Datenmenge oder dergleichen. Käufer eines Fahrzeugs mit einem Telekommunikationsmodul mit wenigstens zwei SIM-Profilen haben die Möglichkeit, ein privates SIM-Profil in der Telekommunikationseinheit vorzusehen. Dies ermöglicht eine von den vom Fahrzeughersteller mit dem Telekommunikationsunternehmen ausgehandelten Konditionen unabhängige Mobilfunknutzung. Das Vorsehen eines privaten Kunden-SIM-Profils erlaubt jedoch die Implementierung manipulierter SIM-Profile in der Telekommunikationseinheit. Da das erfindungsgemäße Mobilfunkgerät jedoch dazu in der Lage ist, mehrere Mobilfunkanschlüsse unabhängig voneinander zu überwachen und zu kontrollieren, kann ein über das SIM-Profil eines Kunden stattfindender Netzwerkverkehr besonders strikt kontrolliert und verwaltet werden, wohingegen der über das SIM-Profil des Fahrzeugherstellers laufende Netzwerkverkehr ungestört weiterlaufen kann.

Eine weitere vorteilhafte Weiterbildung des Verfahrens sieht vor, dass das Systemverhalten dahingehend angepasst wird, dass das Mobilfunkgerät Ereignisse und/oder Informationen protokolliert, wenigstens eine vom Mobilfunkgerät bereitgestellte Funktionalität eingeschränkt oder deaktiviert und/oder ein gewählter Pfad zum Weiterleiten des Netzwerkverkehrs verändert wird. Durch das Protokollieren bzw. Logging von Ereignissen und Informationen lassen sich aus den geloggten Daten Angriffe rekonstruieren bzw. erkennen. Bei der vom Mobilfunkgerät bereitgestellten und eingeschränkten Funktionalität kann es sich beispielsweise um das Durchführen eines Notrufes, eines eCalls, das Durchführen von Telefonie, das Empfangen oder Versenden von SMS und/oder dem Versenden und/oder Empfangen von digitalen Daten per Mobilfunk handeln. Eine Einschränkung kann beispielsweise darin bestehen, dass lediglich eine bestimmte Anzahl an Kommunikationspartnern per Telefonie und/oder SMS erreicht werden kann. Bei einer deaktivierten Funktionalität wären hingegen das Durchführen von Telefonie und/oder das Verschicken von SMS gar nicht mehr möglich. Auch ist es denkbar, über einen Mobilfunkanschluss empfangene Datenpakete in einer sicheren Testumgebung, beispielsweise einer virtuellen Maschine, auf korrekte Funktionsweise bzw. Inhalt zu testen, bevor der entsprechende Netzwerkverkehr an die dem Mobilfunkgerät nachgelagerten Hardware- und/oder Softwarekomponenten weitergeleitet wird.

Die an das Mobilfunkgerät vom Angriffserkennungssystem bzw. dem Angriffserkennung- und-Abwehrsystem erteilten Anweisungen zum Rekonfigurieren dessen Betriebssystems können auf vielfältige Art und Weise umgesetzt werden. So können beispielsweise gezielt Maßnahmen getroffen werden, um den Netzwerkverkehr auf einer der sieben OSI-Schichten zu manipulieren. Dabei können vom Mobilfunkgerät gezielt Manipulationen auf der Anwendungsschicht, auch als Application-Layer bezeichnet, vorgenommen werden. Der Netzwerkverkehr kann auch auf einer der Anwendungsschicht vorgelagerten OSI-Schicht beeinflusst werden. Hierzu erfolgt ein entsprechender Austausch mit einem Mobilfunknetzbetreiber. So kann beispielsweise der Mobilfunknetzbetreiber bei Erkennen eines manipulierten Netzwerkverkehrs über einen von einem Angriff nicht betroffenen Mobilfunkanschluss des Mobilfunkgeräts, Anweisungen an das Mobilfunkgerät zur Rekonfiguration des Betriebssystems bzw. zum Einschränken oder Deaktivieren bestimmter Funktionalitäten übertragen.

Entsprechend einer weiteren vorteilhaften Ausgestaltung des erfindungsgemäßen Verfahrens wird nach Erkennen einer Sicherheitsbedrohung für das Mobilfunkgerät eine Funktionalität wenigstens eines Mobilfunkanschlusses eingeschränkt. Erfolgt über einen ersten Mobilfunkanschluss ein Angriff, so können die für den Angriff erforderlichen Mobilfunkfunktionalitäten, sprich das Verschicken und/oder Empfangen bestimmter Datenpakete, eingeschränkt oder unterbunden werden. Die Mobilfunkkommunikation über zumindest einen weiteren Mobilfunkanschluss kann jedoch ungestört weiterlaufen. Erfolgt beispielsweise ein Angriff über ein manipuliertes SIM-Profil, so kann die Mobilfunkkommunikation über das SIM-Profil des Fahrzeugherstellers ungestört weiterlaufen. Dies gewährleistet, dass weiterhin Diagnosedaten an den Fahrzeughersteller verschickt werden können und/oder beispielsweise Steuerungsbefehle vom Fahrzeug empfangen werden können. Beispielsweise kann ferner zumindest einer der Funktionalitäten eCall, Telefonie, SMS, Datenaustausch oder dergleichen über einen ersten Mobilfunkanschluss, beispielsweise den Kundenanschluss, eingeschränkt werden, und diese Funktionalitäten über einen zweiten Mobilfunkanschluss, beispielsweise den Herstelleranschluss, weiterlaufen.

Bevorzugt wird ein über einen ersten Mobilfunkanschluss ausgetauschter Netzwerkverkehr eingestellt, wenn das Mobilfunkgerät einen Trigger empfängt, insbesondere einen über einen zweiten Mobilfunkanschluss empfangenen Trigger. Durch das Einstellen eines Netzwerkverkehrs im Falle eines Angriffs kann das Mobilfunkgerät besonders zuverlässig vor dem Angriff geschätzt werden. Da das Mobilfunkgerät mehrere Mobilfunkanschlüsse aufweist, kann ein entsprechender Trigger zum Einstellen des Netzwerkverkehrs auch empfangen werden, wenn eine Funktionalität wenigstens eines Mobilfunkanschlusses eingeschränkt oder deaktiviert ist, und zwar über einen noch offenen Mobilfunkanschluss. So kann beispielsweise der Netzwerkverkehr über das SIM-Profil eines Kunden eingestellt werden und der Netzwerkverkehr über das SIM-Profil des Fahrzeugherstellers weiterlaufen. Der Trigger kann dabei vom Fahrzeughersteller, einem Dienstleistungsanbieter, einem Mobilfunknetzbetreiber oder dergleichen an das Mobilfunkgerät verschickt werden. Wird beispielsweise vom Angriffserkennungssystem ein Angriff auf das Mobilfunkgerät festgestellt, so kann über den Mobilfunkanschluss über den kein Angriff erfolgt, diese Information mit einer autorisierten Einrichtung wie dem Fahrzeughersteller, einem IT-Sicherheitsunternehmen, dem Mobilfunknetzbetreiber oder dergleichen geteilt werden, woraufhin die entsprechende Partei den vermeintlichen Angriff analysiert. Wird fälschlicherweise ein Angriff festgestellt, auch als Falsch-Positiv bezeichnet, so kann der Netzwerkverkehr über den Mobilfunkanschluss, der vermeintlich angegriffen wird, weiterlaufen. Handelt es sich hingegen tatsächlich um einen Angriff, so kann über den entsprechenden nicht angegriffenen Mobilfunkanschluss der Trigger zum Abschalten des Netzwerkverkehrs über den Mobilfunkanschluss, der angegriffen wird, verschickt werden.

Erfindungsgemäß umfasst ein Fahrzeug ein im vorigen beschriebenes Telekommunikationsmodul. Bei dem Fahrzeug kann es sich um ein beliebiges Fahrzeug wie einen Pkw, Lkw, Transporter, Bus oder dergleichen handeln. Das Fahrzeug kann einen Verbrennungsmotor und/oder eine elektrische Antriebsmaschine aufweisen. Das Fahrzeug kann zudem manuell, zumindest teilautomatisiert oder auch autonom steuerbar sein. Mit Hilfe eines erfindungsgemäßen Telekommunikationsmoduls kann ein entsprechendes erfindungsgemäßes Fahrzeug besonders sicher betrieben werden.

Weitere vorteilhafte Ausgestaltungen des erfindungsgemäßen Mobilfunkgeräts und des Fahrzeugs ergeben sich auch aus den Ausführungsbeispielen, welche nachfolgend unter Bezugnahme auf die Figuren näher beschrieben werden.

Dabei zeigen:
- Fig. 1: eine schematische Darstellung eines erfindungsgemäßen Mobilfunkgeräts; und
- Fig. 2: eine schematische Darstellung eines erfindungsgemäßen Fahrzeugs mit einem erfindungsgemäßen Mobilfunkgerät in Form eines Telekommunikationsmoduls.

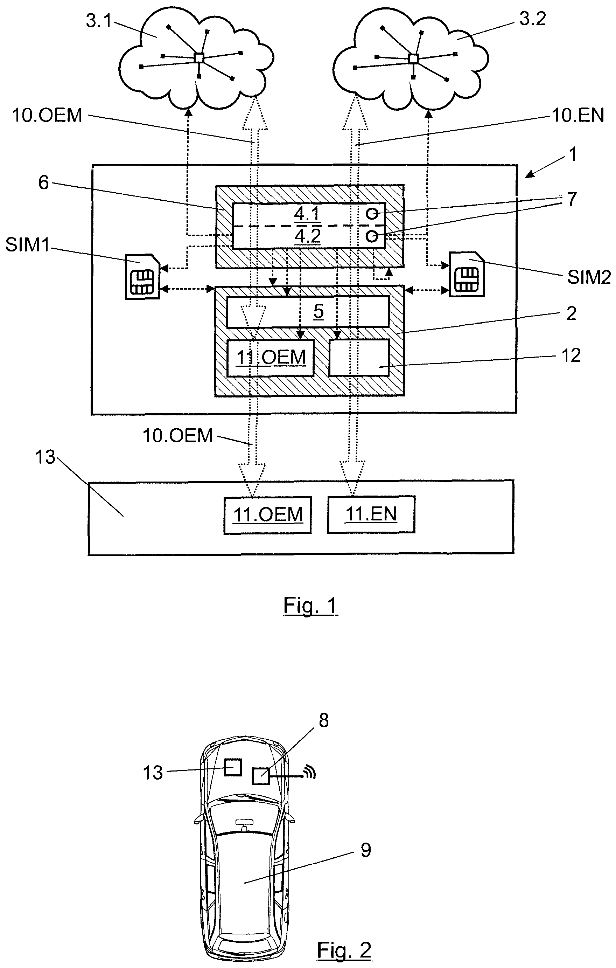

Figur 1 zeigt ein mit einem erfindungsgemäßen Verfahren betreibbares erfindungsgemäßes Mobilfunkgerät 1 mit mehreren Mobilfunkanschlüssen, denen jeweils ein separates SIM-Profil SIM1, SIM2 zugeordnet ist. Mit Hilfe der Mobilfunkanschlüsse ist das Mobilfunkgerät 1 dazu in der Lage, mit mehreren Mobilfunknetzen 3.1, 3.2 zu kommunizieren. Dabei zwischen Mobilfunkgerät 1 und dem oder den Mobilfunknetz(en) 3.1, 3.2 ausgetauschter Netzwerkverkehr läuft über einen OEM Datenpfad 10.OEM sowie einen Endnutzerdatenpfad 10.EN.

Ein vom Mobilfunkgerät 1 umfasstes Modem 6 empfängt den Netzwerkverkehr. Das Modem 6 wiederum umfasst ein Angriffserkennungssystem 4.1 oder ein Angriffserkennungs- und -Abwehrsystem 4.2. Das entsprechende Angriffserkennungssystem 4.1 bzw. Angriffserkennungs- und -Abwehrsystem 4.2 identifiziert die mit dem Netzwerkverkehr übertragenen Informationen. Das Angriffserkennungssystem 4.1 bzw. das Angriffserkennungs- und -Abwehrsystem 4.2 kann zudem ein Deep-Packet-Inspection-Module 7 umfassen, um den Netzwerkverkehr mittels Deep-Packet-Inspection zu untersuchen. Das Angriffserkennungssystem 4.1 bzw. das Angriffserkennungs- und -Abwehrsystem 4.2 kann zudem in einer vorteilhaften Ausführung den Netzwerkverkehr nicht nur überwachen, sondern auch kontrollieren und/oder filtern.

In Informationsflussrichtung dem Modem 6 nachgelagert weist das Mobilfunkgerät 1 ein Betriebssystem 2 auf. Das Betriebssystem 2 kann zudem eine Firewall 5 umfassen. Auf dem Mobilfunkgerät 1 können mit Hilfe des Betriebssystems 2 Funktionalitäten wie eine OEM-Funktion 11.OEM und/oder eine Endnutzer-Funktion 11.EN ausgeführt werden. Bei einer OEM-Funktion 11.OEM handelt es sich beispielsweise um ein Computerprogrammprodukt, welches Fahrzeugdiagnosedaten erfasst, diese gegebenenfalls aufbereitet und über einen der Mobilfunkanschlüsse an einen Fahrzeughersteller verschickt. Bei einer Endnutzer-Funktion 11.EN handelt es sich beispielsweise um ein Computerprogrammprodukt zur Bereitstellung einer Chatfunktion. Die Endnutzer-Funktion 11.EN wird typischerweise durch Software, welche auf separater Hardware wie einer Recheneinheit 13 eines Fahrzeugs oder einem mobilen Endgerät eines Endnutzers ausgeführt wird, bereitgestellt.

Der Endnutzer-Funktion 11.EN findet sich in Informationsflussrichtung auf dem Endnutzer-Datenpfad 10.EN vorgelagert ein Routing-Modul 12 zum gezielten Auswählen eines Pfads zum Weiteleiten des Netzwerkverkehrs.

Detektieren das Angriffserkennungssystem 4.1 bzw. das Angriffserkennungs- und - Abwehrsystem 4.2 einen Angriff auf das Mobilfunkgerät 1, wird ein Systemverhalten des Mobilfunkgeräts 1 bzw. des Betriebssystems 2 angepasst, um auf den Angriff zu reagieren. Diese Rekonfiguration ist in Figur 1 durch gestrichelte Pfeile angedeutet. So kann beispielsweise das Logging von Ereignissen und/oder Informationen initiiert werden, eine Funktionalität des Mobilfunkgeräts 1 eingeschränkt oder deaktiviert werden, insbesondere eine über einen separaten Mobilfunkanschluss bereitgestellte Funktionalität, und/oder ein zum Weiterleiten des Netzwerkverkehrs gewählter Pfad verändert werden. Hierzu können Attribute und Einstellungen der Firewall 5, der SIM-Profile SIM1, SIM2 sowie der OEM-Funktion 11.OEM angepasst werden.

Ferner kann dem Mobilfunkgerät 1 eine Recheneinheit 13 nachgelagert sein. Hierbei kann es sich beispielsweise um einen Personal Computer, ein Steuergerät, eine Telematikeinheit eines Fahrzeugs oder dergleichen handeln. Analog zum Mobilfunkgerät 1 können auch auf der Recheneinheit 13 eine OEM-Funktion 11.OEM und/oder eine Endnutzer-Funktion 11.EN ausgeführt werden.

Figur 2 zeigt eine Integration eines solchen erfindungsgemäßen Mobilfunkgeräts 1 in Form eines Telekommunikationsmoduls 8 in ein erfindungsgemäßes Fahrzeug 9. Durch das Vorsehen wenigstens zweier SIM-Profile SIM1, SIM2 wird das Telekommunikationsmodul 8 auf beiden SIM-Profilen SIM1, SIM2 gleichzeitig empfangs- und sendebereit betrieben. Zum Vorsehen der SIM-Profile SIM1, SIM2 können mit mehreren SIM-Steckplätzen mehrere SIM-Karten in das Mobilfunkgerät 1 integriert werden. Generell können auch mehrere SIM-Profile SIM1, SIM2 auf einer einzelnen SIM-Karte und/oder einer beliebigen Speichereinrichtung des Telekommunikationsmoduls 8 vorgesehen werden. Das Vorsehen wenigstens eines zweiten SIM-Profils SIM2 ermöglicht das Nutzen eines Endnutzer-SIM-Profils, zusätzlich zu einem OEM-SIM-Profil. Ein Endnutzer ist damit dazu in der Lage, in dem Telekommunikationsmodul 8 ein manipuliertes SIM-Profil vorzusehen. Hierdurch können manipulierte Datenpakete in das Telekommunikationsmodul 8 eingeschleust werden und dieses, sprich das Fahrzeug 9, angegriffen werden. Mit Hilfe eines als erfindungsgemäßes Mobilfunkgerät 1 ausgeführten Telekommunikationsmoduls 8 können solche Angriffe jedoch erkannt und nach Bedarf eingedämmt bzw. unterbunden werden. Hierzu kann beispielsweise eine Funktionalität des Mobilfunkgeräts 1 eingeschränkt oder deaktiviert werden. Auch kann eine vollständige Kommunikation über zumindest einen der Mobilfunkanschlüsse beendet werden.

## Patentansprüche

1. Verfahren zum Betreiben eines Systems bestehend aus einem Mobilfunkgerät (1) und einer separaten Recheneinheit (13), das Mobilfunkgerät (1)
umfassend ein Betriebssystem (2) und wenigstens zwei SIM-Profile (SIM1, SIM2) zur Bereitstellung mehrerer voneinander unabhängiger Mobilfunkanschlüsse, wobei ein Netzwerkverkehr über wenigstens einen Mobilfunkanschluss mit einem Mobilfunknetz (3.1, 3.2) ausgetauscht wird und mit dem Netzwerkverkehr übertragene Informationen identifiziert werden,
**dadurch gekennzeichnet, dass**
das Mobilfunkgerät (1) ferner ein Angriffserkennungssystem (4.1) oder ein Angriffserkennungs- und -Abwehrsystem (4.2) umfasst, welches dazu eingerichtet ist, zumindest die mit dem Netzwerkverkehr übertragenen Informationen zu identifizieren, wobei das Angriffserkennungssystem (4.1) oder das Angriffserkennungs- und -Abwehrsystem (4.2) in einer Informationsflussrichtung von wenigstens einem Mobilfunkanschluss empfangenen Netzwerkverkehrs vor dem Betriebssystem (2) des Mobilfunkgeräts (1) angeordnet ist, und
das Angriffserkennungssystem (4.1) oder das Angriffserkennungs- und - Abwehrsystem (4.2) in ein Modem (6) integriert ist, wobei
nach Erkennen einer Sicherheitsbedrohung für das Mobilfunkgerät (1) das Betriebssystem (2) rekonfiguriert wird, um ein Systemverhalten an die Sicherheitsbedrohung anzupassen und/oder eine Funktionalität wenigstens einer dem Mobilfunkgerät (1) in Informationsflussrichtung nachgelagerten Hardware- und/oder Softwarekomponente der separaten Recheneinheit (13) eingeschränkt wird.

2. Verfahren nach Anspruch 1,
**gekennzeichnet durch**
eine dem Angriffserkennungssystem (4.1) oder dem Angriffserkennungs- und - Abwehrsystem (4.2) im Mobilfunkgerät (1) in Informationsflussrichtung nachgeordnete Firewall (5).

3. Verfahren nach Anspruch 1 oder 2,
**dadurch gekennzeichnet, dass**
das Angriffserkennungssystem (4.1) oder das Angriffserkennungs- und - Abwehrsystem (4.2) im Mobilfunkgerät (1) dazu eingerichtet ist den Netzwerkverkehr zu überwachen, zu kontrollieren und/oder zu filtern.

4. Verfahren nach einem der Ansprüche 1 bis 3,
**dadurch gekennzeichnet, dass**
ein Deep-Packet-Inspection-Module (7) in das Angriffserkennungssystem (4.1) oder das Angriffserkennungs- und -Abwehrsystem (4.2) im Mobilfunkgerät (1) integriert ist.

5. Verfahren nach einem der Ansprüche 1 bis 4,
**gekennzeichnet durch**
eine Ausführung des Mobilfunkgeräts (1) als mobiles Endgerät oder Telekommunikationsmodul (8) eines Fahrzeugs (9).

6. Verfahren nach einem der Ansprüche 1 bis 5,
**dadurch gekennzeichnet, dass**
das Systemverhalten dahingehend angepasst wird, dass das Mobilfunkgerät (1) Ereignisse und/oder Informationen protokolliert, wenigstens eine vom Mobilfunkgerät (1) bereitgestellte Funktionalität eingeschränkt oder deaktiviert und/oder ein gewählter Pfad zum Weiterleiten des Netzwerkverkehrs verändert wird.

7. Verfahren nach einem der Ansprüche 1 bis 6,
**dadurch gekennzeichnet, dass**
nach Erkennen einer Sicherheitsbedrohung für das Mobilfunkgerät (1) eine Funktionalität wenigstens eines Mobilfunkanschlusses eingeschränkt wird.

8. Verfahren nach Anspruch 7,
**dadurch gekennzeichnet, dass**
ein über einen ersten Mobilfunkanschluss (1) ausgetauschter Netzwerkverkehr eingestellt wird, wenn das Mobilfunkgerät (1) einen Trigger empfängt, insbesondere einen über einen zweiten Mobilfunkanschluss empfangenen Trigger.

9. Fahrzeug (9),
**gekennzeichnet, durch**
ein als Telekommunikationsmodul (8) ausgeführtes Mobilfunkgerät (1) und einer separaten Recheneinheit (13), welches eingerichtet ist das Verfahren nach Anspruch 5 auszuführen.

## Claims

1. Method for operating a system consisting of a mobile device (1) and a separate computing unit (13), the mobile device (1)
comprising an operating system (2) and at least two SIM profiles (SIM1, SIM2) for providing multiple independent mobile connections, network traffic being exchanged via at least one mobile connection with a mobile network (3.1, 3.2) and information transmitted using the network traffic being identified,
**characterized in that**
the mobile device (1) further comprises an attack detection system (4.1) or an attack detection and defense system (4.2) which is configured to identify at least the information transmitted using the network traffic, the attack detection system (4.1) or the attack detection and defense system (4.2) being arranged, in an information flow direction of network traffic received from at least one mobile connection, upstream of the operating system (2) of the mobile device (1), and
the attack detection system (4.1) or the attack detection and defense system (4.2) being integrated into a modem (6), wherein,
after a security threat to the mobile device (1) is detected, the operating system (2) is reconfigured to adapt a system behavior to the security threat and/or a functionality of at least one hardware and/or software component of the separate computing unit (13) downstream of the mobile device (1) in the information flow direction is restricted.

2. Method according to claim 1,
**characterized by**
a firewall (5) which is downstream of the attack detection system (4.1) or the attack detection and defense system (4.2) in the mobile device (1) in the information flow direction.

3. Method according to claim 1 or claim 2,
**characterized in that**
the attack detection system (4.1) or the attack detection and defense system (4.2) in the mobile device (1) is configured to monitor, control and/or filter the network traffic.

4. Method according to any of claims 1 to 3,
**characterized in that**
a deep packet inspection module (7) is integrated into the attack detection system (4.1) or the attack detection and defense system (4.2) in the mobile device (1).

5. Method according to any of claims 1 to 4,
**characterized by**
a design version of the mobile device (1) as a mobile terminal or telecommunications module (8) of a vehicle (9).

6. Method according to any of claims 1 to 5,
**characterized in that**
the system behavior is adapted such that the mobile device (1) logs events and/or information, at least one functionality provided by the mobile device (1) is restricted or disabled and/or a chosen path for forwarding network traffic is changed.

7. Method according to any of claims 1 to 6,
**characterized in that**
after a security threat to the mobile device (1) is detected, the functionality of at least one mobile connection is restricted.

8. Method according to claim 7,
**characterized in that**
network traffic exchanged via a first mobile connection (1) is adjusted when the mobile device (1) receives a trigger, in particular a trigger received via a second mobile connection.

9. Vehicle (9),
**characterized by**
a mobile device (1) designed as a telecommunications module (8), and a separate computing unit (13), which device is configured to carry out the method according to claim 5.

## Revendications

1. Procédé permettant de faire fonctionner un système constitué d'un appareil radiotéléphonique mobile (1) et d'une unité de calcul séparée (13), l'appareil radiotéléphonique mobile (1)
comprenant un système d'exploitation (2) et au moins deux profils SIM (SIM1, SIM2) pour la mise à disposition de plusieurs connexions radiotéléphoniques mobiles indépendantes les uns des autres, dans lequel un trafic réseau est échangé par l'intermédiaire d'au moins une connexion radiotéléphonique mobile avec un réseau radiotéléphonique mobile (3.1, 3.2) et des informations transmises avec le trafic réseau sont identifiées,
**caractérisé en ce que**
l'appareil radiotéléphonique mobile (1) comprend en outre un système de détection d'attaques (4.1) ou un système de détection et de défense contre les attaques (4.2) qui est configuré pour identifier au moins les informations transmises avec le trafic réseau, dans lequel le système de détection d'attaques (4.1) ou le système de détection et de défense contre les attaques (4.2) est disposé en amont du système d'exploitation (2) de l'appareil radiotéléphonique mobile (1) dans une direction de flux d'informations de trafic réseau reçu d'au moins une connexion radiotéléphonique mobile, et
le système de détection d'attaques (4.1) ou le système de détection et de défense contre les attaques (4.2) est intégré dans un modem (6), dans lequel
après détection d'une menace de sécurité pour l'appareil radiotéléphonique mobile (1), le système d'exploitation (2) est reconfiguré afin d'adapter un comportement de système à la menace de sécurité et/ou une fonctionnalité d'au moins un composant matériel et/ou logiciel de l'unité de calcul séparée (13), situé en aval de l'appareil radiotéléphonique mobile (1) dans la direction de flux d'informations, est limitée.

2. Procédé selon la revendication 1,
**caractérisé par**
un pare-feu (5) placé en aval du système de détection d'attaques (4.1) ou du système de détection et de défense contre les attaques (4.2) dans l'appareil radiotéléphonique mobile (1) dans la direction de flux d'informations.

3. Procédé selon la revendication 1 ou 2,
**caractérisé en ce que**
le système de détection d'attaques (4.1) ou le système de détection et de défense contre les attaques (4.2) dans l'appareil radiotéléphonique mobile (1) est configuré pour surveiller, contrôler et/ou filtrer le trafic réseau.

4. Procédé selon l'une des revendications 1 à 3,
**caractérisé en ce que**
un module d'inspection approfondie de paquets (7) est intégré dans le système de détection d'attaques (4.1) ou dans le système de détection et de défense contre les attaques (4.2) dans l'appareil radiotéléphonique mobile (1).

5. Procédé selon l'une des revendications 1 à 4,
**caractérisé par**
une réalisation de l'appareil radiotéléphonique mobile (1) en tant que terminal mobile ou module de télécommunication (8) d'un véhicule (9).

6. Procédé selon l'une des revendications 1 à 5,
**caractérisé en ce que**
le comportement de système est adapté de telle sorte que l'appareil radiotéléphonique mobile (1) consigne des événements et/ou des informations, qu'au moins une fonctionnalité mise à disposition par l'appareil radiotéléphonique mobile (1) est limitée ou désactivée et/ou qu'un chemin choisi pour l'acheminement du trafic réseau est modifié.

7. Procédé selon l'une des revendications 1 à 6,
**caractérisé en ce que**
après détection d'une menace de sécurité pour l'appareil radiotéléphonique mobile (1), une fonctionnalité d'au moins une connexion radiotéléphonique mobile est limitée.

8. Procédé selon la revendication 7,
**caractérisé en ce que**
un trafic réseau échangé par l'intermédiaire d'une première connexion radiotéléphonique mobile (1) est réglé lorsque l'appareil radiotéléphonique mobile (1) reçoit un déclencheur, en particulier un déclencheur reçu par l'intermédiaire d'une seconde connexion radiotéléphonique mobile.

9. Véhicule (9),
**caractérisé par**
un appareil radiotéléphonique mobile (1) réalisé sous forme de module de télécommunication (8) et une unité de calcul séparée (13), lequel appareil radiotéléphonique mobile est configuré pour exécuter le procédé selon la revendication 5.
